# FASCICULE DE BREVET EUROPEEN

(11) **EP 0 429 363 B1**
(45) Date de publication et mention de la délivrance du brevet: **04.05.1994**
(21) Numéro de dépôt: 90403288.5
(22) Date de dépôt: 21.11.1990
(51) Int. Cl.: F16F 1/36, B60K 5/12

(54) **Elément élastique de support à raideurs échelonnées**
Elastisches Lagerelement mit abgestufter Festigkeit
Elastic supporting element with stepwise variable rigidity

(30) Priorité: 24.11.1989 FR 8915495
(43) Date de publication de la demande: 29.05.1991
(73) Titulaire: PAULSTRA GMBH, D-68060 Mannheim (DE)
(72) Inventeur: Spaltofski, Ralf, W-6700 Ludwigshafen (DE)
(74) Mandataire: Picard, Jean-Claude Georges

(56) Documents cités:
- EP-A- 0 302 126
- CH-A- 497 296
- DE-A- 2 317 856
- DE-A- 2 328 566
- DE-A- 3 334 649
- DE-U- 1 773 602
- DE-U- 1 913 901
- FR-A- 2 428 768
- GB-A- 1 050 987
- PATENT ABSTRACTS OF JAPAN vol. 12, no. 257 (M-719)(3104) 20 juillet 1988, & JP-A-63 38732 (KINUGAWA RUBBER) 19 février 1988,
- PATENT ABSTRACTS OF JAPAN vol. 12, no. 247 (M-717)(3094) 13 juillet 1988, & JP-A-63 34340 (KINUGAWA RUBBER) 15 février 1988,

## Description

La présente invention concerne un élément de matériau élastique en élastomère selon le preambule de la revendication 1.

Dans de nombreuses applications, notamment dans les dispositifs élastiques destinés à assurer la suspension des moteurs à combustion interne sur les châssis des véhicules, il est nécessaire d'obtenir une faible raideur (faible module d'élasticité) lorsque le dispositif est soumis à de faibles contraintes de force, notamment en compression, et une raideur nettement plus élevée à partir du moment où les contraintes dépassent une valeur déterminée.

La raison de cette exigence est que pour les faibles amplitudes des efforts qui s'exercent sur le dispositif, un bon amortissement des bruits et des vibrations normales du moteur nécessite une très faible raideur du support. Par contre, cette faible raideur deviendrait un inconvénient si elle subsistait pour les très fortes amplitudes des efforts de compression, telles que celles qui peuvent se produire lorsque le véhicule passe sur un nid-de-poule ou autre brutale discontinuité de la chaussée. En effet, dans ce cas le dispositif élastique de support ne remplirait plus son rôle amortisseur, et l'arrivée en butée serait brutale.

C'est donc la nécessité d'obtenir une mise en butée progressive même lorsque les efforts sont importants et brutaux, s'apparentant à des chocs, qui impose d'établir des dispositifs dont la raideur soit fortement croissante lorsque les efforts de compression qui s'exercent sur eux augmentent.

On connaît déjà des dispositifs du type défini plus haut, notamment par le document GB-A-1 050 987.

Le but de la présente invention est de perfectionner ce type de dispositifs de sorte à ce qu'ils présentent plusieurs échelons de raideurs, et même un nombre quelconque d'échelons, selon les applications.

A cet effet, un élément élastique de support conforme à la présente invention est caractérisé en ce que ledit corps central est recouvert, sur au moins deux de ses faces opposées, destinées à être soumises à des efforts de compression, d'un certain nombre de plots de section réduite par rapport à la section dudit corps central, ces plots étant en saillie sur la surface dudit corps, et au moins une partie desdits plots de section réduite servant chacun de soubassement à au moins un plot extérieur de section encore plus réduite que les précédents.

En d'autres termes, l'élément de matériau élastique comporte extérieurement des parties de section réduite, ou plots, en saillie sur un corps central de section plus importante : lorsque les efforts de compression s'exerçant sur l'élément sont faibles, la raideur de l'élément reste faible, puisque ces efforts ne provoquent pratiquement que l'écrasement progressif des plots, lesquels ont bien entendu une faible raideur. Par contre, lorsque ces efforts dépassent une certaine valeur, prédéterminée, la raideur de l'élément augmente brusquement à partir du moment où les plots sont presque complètement écrasés.

Par ailleurs, on comprend aussi que si un certain nombre de plots constitue le soubassement de plots extérieurs de section encore plus réduite, on aura une augmentation de raideur à deux échelons : une première augmentation brusque de raideur après écrasement pratiquement complet des plots extérieurs une seconde augmentation brusque de raideur après écrasement pratiquement complet des plots de soubassement, ensuite de quoi c'est la raideur du corps de l'élément qui entre en jeu pour assurer les plus fortes raideurs et conférer à l'élément une fonction efficace de butée.

Si, en outre, les premiers plots cités servent de soubassements, non pas chacun (ou seulement une partie d'entre eux) à un plot de section plus réduite mais à un étagement de plusieurs plots de section de plus en plus réduite en allant du corps vers l'extérieur, on conçoit que l'on obtiendra un corps à raideurs étagées ou échelonnées ; si F désigne les efforts de compression et D l'aplatissement relatif de l'élément sous ces efforts, on pourra ainsi conférer à la courbe F = f(D) exactement la forme voulue, en choisissant de façon appropriée la forme, le nombre et la section des plots de chaque étage.

Un élément conforme à l'invention pourra donc être encore caractérisé par un certain nombre d'étagements de plots, dont les sections se réduisent en gradins, en allant du corps vers l'extérieur.

La forme de la section transversale de ces plots pourra bien entendu être extrêmement variée : circulaire, carrée, rectangulaire, triangulaire etc. Un même plot pourra aussi être lui-même de section variable, par exemple en cône, en pyramide etc, toutes formes et dispositions étant théoriquement possibles.

Conformément à l'invention, on pourra obtenir des possibilités supplémentaires en faisant en sorte que l'élément comporte des évidements de dimensions propres à se réduire sous l'effet des efforts de compression, la mise en contact mutuelle de leurs parois voisines provoquant un accroissement brusque supplémentaire de la raideur de l'élément à partir du moment où lesdits efforts atteignent une valeur déterminée, supérieure à celle qui provoque l'écrasement desdits plots.

Ces évidements peuvent être constitués par des interstices séparant au moins certains desdits plots, par exemple les plots de soubassement desdits étagements.

Dans le cas d'un corps de forme générale cylindrique, les interstices pourront être radiaux et d'espacements angulaires constants.

En considérant qu'un élément de matériau élastique soumis à des contraintes de compression sur deux de ses faces opposées tend à se dilater latéralement, le principe général de l'invention peut mettre à profit cette caractéristique pour que l'élément présente encore une augmentation brusque de raideur à partir du moment où ces contraintes de compression dépassent un certain seuil. Il suffira de prévoir à cet effet une mise en appui particulière des surfaces latérales de l'élément sur une pièce latérale de maintien à partir du moment où les efforts de compression atteindront ledit seuil. Cette mise en appui particulière pourra être obtenue soit par un dessin particulier de la pièce latérale de maintien, soit par un dessin particulier de la surface latérale de l'élément de matériau élastique, comme cela sera vu plus bas.

Des modes d'exécution de l'invention vont maintenant être décrits à titre d'exemples nullement limitatifs avec référence aux figures du dessin annexé dans lequel :
- la figure 1 est une vue de dessous d'un élément élastique de support conforme à l'invention, dont le corps est de forme générale cylindrique ;
- la figure 2 est une vue en coupe diamétrale selon la ligne II-II de la figure 1 ;
- la figure 3 est une vue de dessus du même élément ;
- la figure 4 montre schématiquement l'élément incorporé, en tant que butée de traction, au dispositif de support d'un moteur à combustion interne ;
- la figure 5 montre schématiquement comment, grâce à l'invention, il est possible de modifier les courbes F = f(D) d'un élément élastique de support conforme à l'invention ;
- les figures 6 et 7 sont des vues de dessus partielles et combinées, montrant des variantes possibles de la forme de l'élément élastique de support ;
- les figures 8 et 9a, 9b sont des vues en coupe verticale montrant encore d'autres formes possibles des éléments élastiques ;
- la figure 10 montre deux demi-coupes axiales d'un élément élastique de support conforme à l'invention, pourvu de ses pièces de liaison et apte à constituer à la fois une butée de compression et une butée de traction ; et
- la figure 11 montre les éléments élastiques de la figure 10 vus de dessus.

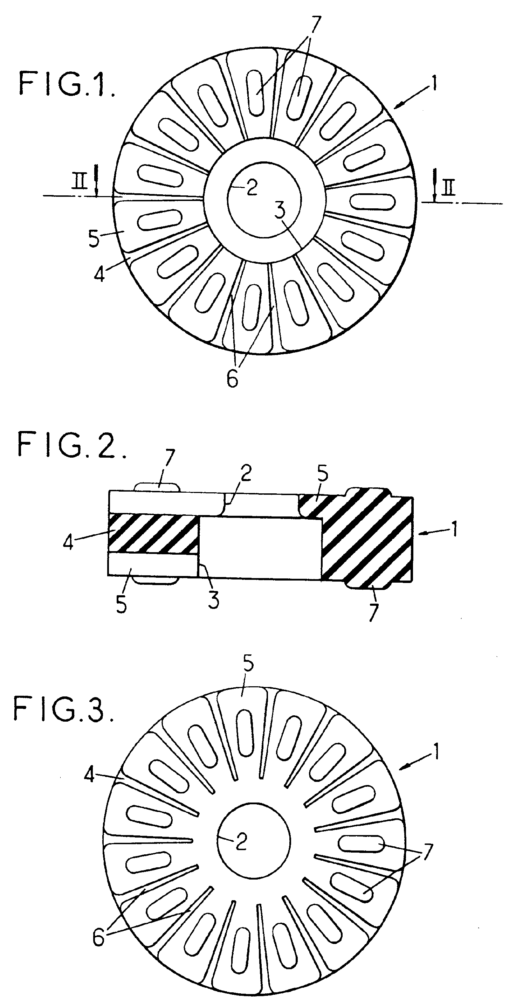

Dans le mode de réalisation des figures 1 à 3, l'élément de matériau élastique 1 se présente sous la forme générale d'un disque cylindrique percé en son centre d'un trou 2 élargi à sa partie inférieure, en 3, l'axe de ce trou, qui sert à assurer la fixation de l'élément sur une tige de liaison à un corps quelconque, étant dirigé selon ce que l'on a appelé plus haut "la direction principale", à savoir celle des efforts de compression que l'élément est destiné à supporter.

L'élément 1, en élastomère moulé d'une pièce, comporte un corps central 4 recouvert, sur chacune de ses deux faces opposées, d'une première série de plots 5 de section réduite, en forme de secteurs de cercle d'angles au centre égaux et équiangulairement séparés par des interstices radiaux 6. Chaque plot 5 sert de soubassement à un plot extérieur de section notablement plus faible, 7.

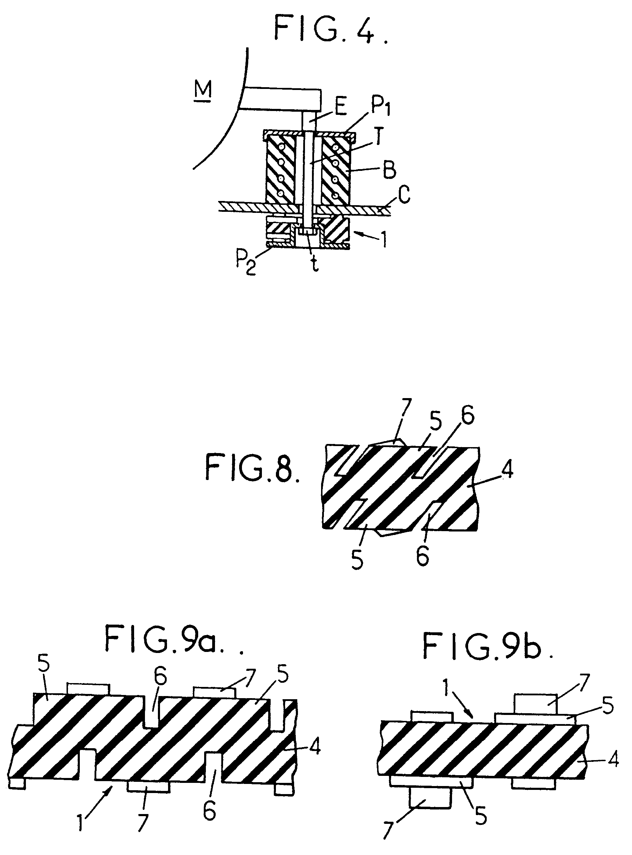

La figure 4 montre comment cet élément 1 peut être utilisé pour supporter des effors de compression tout en servant de butée de traction, dans un système de suspension de moteur de véhicule. Le moteur est schématisé en M et le châssis du véhicule en C. Par l'intermédiaire de l'épaulement E d'une tige T et d'une plaque de butée P1, le moteur M est supporté par un bloc d'élastomère B qui peut être classique ou à alvéoles internes et qui est en appui sur le chassis C.

L'élément 1 conforme à l'invention est comprimé entre le même chassis C, par en dessous, et une autre plaque de butée, P2, en forme de cuvette, dont le fond est engagé dans la partie élargie 3 du trou qui traverse l'élément et est maintenu en place par la tête t de la tige T.

On voit qu'un élément 1 ainsi disposé permettra de limiter les débattements du moteur M vers le haut, lorsqu'une traction sera exercée sur la tige T.

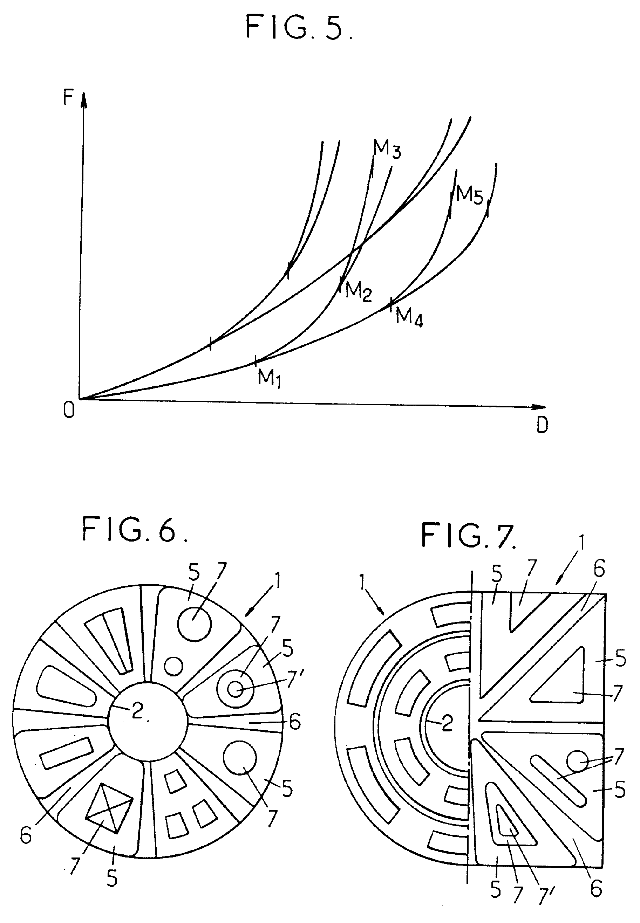

Pour les faibles débattements, l'écrasement de l'élément 1 entre le chassis C et la plaque P2 se limitera à un écrasement des plots extérieurs 7. La raideur de l'élément sera donc très faible ; cette phase peut être considérée comme illustrée par la portion de courbe O-M1 sur le graphique F = f(D) de la figure 5. Pour des débattements un peu plus importants, l'écrasement des plots 7 est complet, et intervient alors l'écrasement progressif des plots de soubassement 5, ce qui peut être considéré comme illustré par la partie de courbe à plus grande pente M1-M2 sur la figure 5, qui montre une augmentation considerable de la raideur. Lorsque les plots sont fortement écrasés, le bombement de leurs parois latérales amène ces parois en contact mutuel, moment à partir duquel (en M2) sur le graphique, la raideur augmente encore pour devenir pratiquement, entre M2 et M3, celle du corps central 4 de l'élément. On obtient ainsi l'effet de butée requis, mais avec une progressivité de l'augmentation de la raideur entre la raideur la plus faible et la raideur la plus élevée.

La figure 5 montre d'autres évolutions possibles de la courbe, telles que M1-M4-M5, que l'on peut obtenir avec d'autres configurations ou formes des plots ou des interstices entre plots.

D'autres formes et configurations sont montrées en plan aux figures 6 et 7, avec des références numériques correspondant à celles des figures 1 à 3 pour désigner les parties analogues respectives des éléments. On voit que certains plots 5 peuvent servir de soubassements à des étagements de plots tels que 7, 7', ce qui permet, en cas de besoin, d'affiner encore la courbe F = f(D).

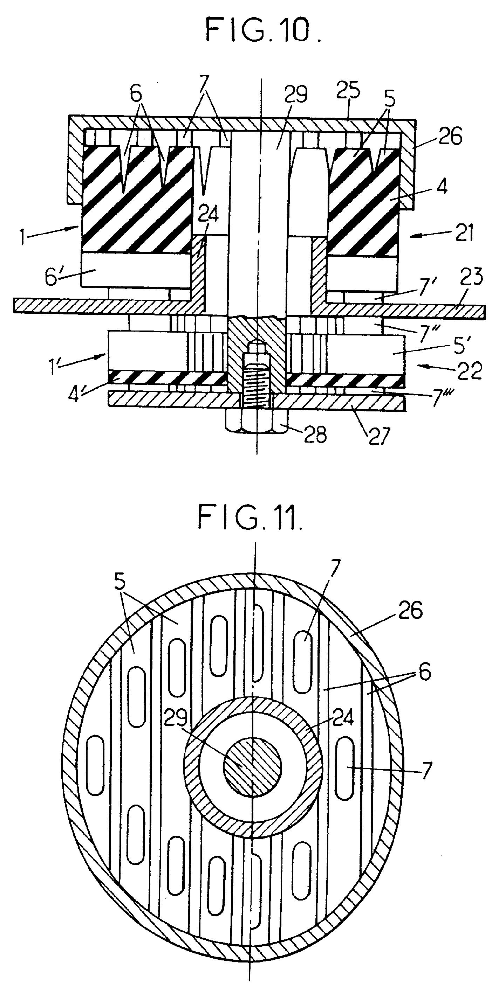

Les figures 8 et 9a, 9b montrent en coupe quelques autres formes possibles des plots et des interstices d'éléments élastiques 1 encore conformes à l'invention, les modes de réalisation des figures 9a et 9b étant à structures décalées.

Aux figures 10 et 11 on a représenté un système de suspension complet, comportant une butée de compression 21 et une butée de traction 22 comportant des éléments de matériau élastique conformes à l'invention.

L'élément 1 de la butée de compression 21 est comprimé entre une plaque de châssis 23 à collet 24, et le fond 25 d'une cuvette d'appui à rebord de guidage et d'appui latéral 26. Il comporte des plots de soubassement 5 séparés par des encoches à section triangulaire 6 et portant eux-mêmes des plots à section réduite 7 en butée sur le fond 25. De même, il comporte à sa partie inférieure des plots à section réduite 7' en appui sur la plaque de châssis 23 et portés par des plots de soubassement séparés par des encoches 6'.

Quant à l'élément 1' de la butée de traction 22, il est comprimé, par en dessous, entre la plaque de châssis 23 et une autre plaque de buée 27 fixée par un boulon 28 à l'extrémité inférieure d'un axe 29 dont l'autre extrémité est fixée sur le fond 25, par exemple par soudage.

L'élément 1' comporte de même des plots de faible section 7'' et 7''' portés par un corps 4' avec, pour les plots 7'', le soubassement de plots intermédiaires de section plus importante 5' également séparés par des interstices, par exemple des interstices radiaux.

On voit cependant à la partie supérieure de la figure 10 et à la figure 11 que les interstices 6 sont parallèles entre eux, de même que les interstices 6', ce qui confère à l'élément 1 des raideurs radiales différentes. On peut encore augmenter la dissymétrie des raideurs transversales en conférant à la section transversale de l'élément une forme non pas circulaire, comme représenté sur la partie gauche du dessin, mais une forme elliptique, comme représenté sur la partie droite.

## Revendications

1. Elément de matériau élastique (1) en élastomère destiné à être soumis à des efforts de compression dans une direction principale déterminée,et à être ainsi aplati entre deux de ses extrémités,de telle sorte que, considéré dans le sens allant de l'une au moins de ces extrémités vers l'intérieur, il présente au moins un accroissement brusque de section, transversalement à ladite direction principale, grâce à quoi la raideur de l'élément (1) peut augmenter dans une proportion notablement supérieure à l'accroissement desdits efforts à partir du moment où ceux-ci atteignent une valeur déterminée, cet élément est constitué à cet effet d'un corps central (4) portant sur une des ses faces destinée à être soumise à des efforts de compression un plot (5) de section réduite par rapport à celle dudit corps central (4), le plot (5) de section réduite étant en saillie sur la surface du corps (4), au moins une partie dudit plot (5) de section réduite servant de soubassement à un plot extérieur (7) de section encore plus réduite que le précédent, **caractérisé en ce que** ledit corps central (4) est recouvert, sur au moins deux de ses faces opposées, destinées à être soumises à des efforts de compression, d'un certain nombre de plots (5) de section réduite par rapport à la section dudit corps central (4), ces plots (5) étant en saillie sur la surface dudit corps (4), et au moins une partie desdits plots (5) de section réduite servant chacun de soubassement à au moins un plot extérieur (7) de section encore plus réduite que les précédents.

2. Elément selon la revendication 1, caractérisé par un certain nombre d'étagements de plots (5, 7), dont les sections se réduisent en gradins, en allant du corps (4) vers l'extérieur.

3. Elément selon la revendication 1 ou 2, caractérisé en ce qu'il comporte des évidements (6) de dimensions propres à se réduire sous l'effet des efforts de compression, la mise en contact mutuelle de leurs parois voisines provoquant un accroissement brusque supplémentaire de la raideur de l'élément à partir du moment où lesdits efforts atteignent une valeur déterminée, supérieure à celle qui provoque l'écrasement desdits plots.

4. Elément selon la revendication 3, caractérisé en ce que ces évidements sont constitués par des interstices (6) séparant au moins certains (5) desdits plots.

5. Elément selon les revendications 2 à 4, caractérisé en ce que lesdits interstices (6) séparent au moins les plots de soubassement (5) desdits étagements (5, 7).

6. Elément selon l'une quelconque des revendications précédentes, caractérisé par un corps (4) de forme générale cylindrique et par des interstices (6) radiaux, d'espacements angulaires constants.

7. Elément selon l'une quelconque des revendications 1 à 5, caractérisé en ce que les interstices (6, 6') débouchant sur une même face de l'élément (1) sont parallèles entre eux.

8. Elément selon l'une quelconque des revendications précédentes, caractérisé en ce que ses parois latérales extérieures (14) et/ou intérieures -dans le cas où il comporte un évidement axial- présentent également des parties de section réduite, réalisées sous la forme de rainures (18, 20) et/ou de plots (16, 19), propres à coopérer avec des surfaces latérales d'appui (12, 12', 13', 17, 26) correspondantes pour conférer à l'élément un brusque accroissement de raideur transversale à partir du moment où il est soumis à un effort de compression prédéterminé dans ladite direction principale.

## Patentansprüche

1. Elastisches Element (1) aus elastomerem Material, das Druckkräften in einer vorgegebenen Hauptrichtung unterworfen werden soll, durch die es zwischen zwei Enden abgeplattet wird, so daß es in der wenigstens von einem Ende nach innen verlaufenden Richtung gesehen wenigstens eine schroffe Querschnittsvergrößerung in Querrichtung zu der erwähnten Hauptrichtung aufweist, aufgrund der sich der Steifigkeit (Righeit) des Elementes (1) von dem Augenblick an, an dem die Druckkräfte einen vorgegebenen Wert erreichen, in einem Verhältnis vergrößern kann, das beträchtlich größer ist als die Erhöhung der Druckkräfte, wobei das Element zu diesem Zweck aus einem mittleren Körper (4) besteht, der an einer seiner Oberflächen, die den Druckkräften unterworfen werden sollen, ein Kontaktstück (5) mit einem bezogen auf den Querschnitt des mittleren Körpers (4) verringertem Querschnitt aufweist, und das Kontaktstück (5) mit verringertem Querschnitt gegenüber der Oberfläche des Körpers (4) vorspringt und wenigstens ein Teil des Kontaktstückes (5) mit verringertem Querschnitt als Träger für ein äußeres Kontaktstück (7) dient, dessen Querschnitt noch kleiner ist als der des Kontaktstückes (5), dadurch gekennzeichnet, daß der mittlere Körper (4) wenigstens auf zwei sich gegenüberliegenden Oberflächen, die den Druckkräften unterworfen werden sollen, mit einer bestimmten Anzahl von Kontaktstücken (5) bedeckt ist, deren Querschnitt kleiner ist als der Querschnitt des mittleren Körpers (4), wobei die Kontaktstücke (5) gegenüber der Oberfläche des Körpers (4) vorstehen und wenigstens ein Teil der Kontaktstücke mit verringertem Querschnitt für sich als Träger für wenigstens ein äußeres Kontaktstück (7) dient, dessen Querschnitt noch mehr verringert ist als der der Kontaktstücke (5).

2. Element nach Anspruch 1, gekennzeichnet durch eine eine bestimmte Anzahl von Abstufungen der Kontaktstücke (5, 7), deren Querschnitte sich ausgehend von dem Körper (4) stufenförmig nach außen verringern.

3. Element nach Anspruch 1 oder 2, dadurch gekennzeichnet, daß es Ausnehmungen (6) enthält, deren Abmessungen sich unter der Wirkung von Druckkräften verkleinern können, wobei die gegenseitige Berührung ihrer benachbarten Wandungen eine zusätzliche schlagartige Vergrößerung der Steifigkeit des Elementes von dem Augenblick an hervorruft, an dem die Druckkräfte einen vorgegebenen Wert erreichen, der oberhalb des Wertes liegt, der die Stauchung der Kontaktstücke hervorruft.

4. Element nach Anspruch 3, dadurch gekennzeichnet, daß die Ausnehmungen aus Zwischenräumen oder Spalten (6) bestehen, die wenigstens bestimmte Kontaktstücke (5) trennen.

5. Element nach den Ansprüchen 2 bis 4, dadurch gekennzeichnet, daß die Spalte (6) wenigstens die Trägerkontaktstücke (5) der stufenförmigen Anordnung (5, 7) trennen.

6. Element nach einem der vorhergehenden Ansprüche, gekennzeichnet durch einen Körper (4) mit allgemein zylindrischer Form und durch radial verlaufende Spalte (6) mit konstanten Winkelabständen.

7. Element nach einem der vorhergehenden Ansprüche 1 bis 5, dadurch gekennzeichnet, daß die Spalte (6, 6'), die an der gleichen Oberfläche des Elementes (1) münden, zueinander parallel verlaufen.

8. Element nach einem der vorhergehenden Ansprüche, dadurch gekennzeichnet, daß die äußeren Seitenwände (14) und/oder die inneren Seitenwände des Elementes - wenn das Element eine axiale Ausnehmung enthält - ebenfalls Abschnitte mit verringertem Querschnitt aufweisen, die als Rinnen (18, 20) und/oder als Kontaktstücke (16, 19) ausgebildet und mit entsprechenden seitlichen Stützoberflächen (12, 12', 13', 17, 26) zusammenwirken können, um dem Element eine schlagartige Vergrößerung der Steifigkeit in Querrichtung von dem Augenblick an zu verleihen, an dem das Element einer vorgegebenen Druckbelastung in der erwähnten Hauptrichtung unterworfen wird.

## Claims

1. Component (1) made from an elastic elastomer material intended to be subjected to compressive forces in a given principal direction, and to be thus flattened between two of its ends, in such a manner that, considered when facing away from at least one of these ends towards the inside, it has at least one abrupt increase in cross section, at right angles to the said principal direction, by virtue of which the stiffness of the component (1) can increase in a proportion which is considerably greater than the increase in the said forces from the moment when the latter reach a given value, this component consists for this purpose of a central body (4) bearing on one of its faces intended to be subjected to compressive forces a stud 5 having a smaller cross section than that of the said central body (4), the stud (5) with the smaller cross section projecting from the surface of the body (4), at least one part of the said stud (5) with a smaller cross section serving as a base for an outer stud (7) with an even smaller cross section than the previous one, characterised in that the said central body (4) is covered, on at least two of its opposite faces intended to be subjected to compressive forces, with a certain number of studs (5) with a smaller cross section than the cross section of the said central body (4), these studs (5) projecting from the surface of the said body (4) and at least some of the said studs (5) with a smaller cross section each serving as a base for at least one outer stud (7) with an even smaller section than the previous ones.

2. Component according to Claim 1, characterised by a certain number of tiers of studs (5, 7), the cross sections of which become smaller in stages, going from the main body (4) towards the outside.

3. Component according to Claim 1 or 2, characterised in that it has recesses (6) with dimensions able to become smaller under the effect of compressive forces, the bringing into mutual contact of their neighbouring walls causing an abrupt further increase in the stiffness of the component from the moment when the said forces reach a given value, which is greater than that which causes the crushing of the said studs.

4. Component according to Claim 3, characterised in that these recesses are formed by interstices (6) separating at least some (5) of the said studs.

5. Component according to Claims 2 to 4, characterised in that the said interstices (6) separate at least the base studs (5) of the said tiers (5, 7).

6. Component according to any one of the preceding claims, characterised by a body (4) of a general cylindrical shape and by radial interstices (6) with constant angular spacings.

7. Component according to any one of Claims 1 to 5, characterised in that the interstices (6, 6') opening out onto one and the same face of the component (1) are parallel to each other.

8. Component according to any one of the preceding claims, characterised in that its outer (14) and/or inner lateral walls - where it has an axial recess - also have parts with a smaller cross section, produced in the form of grooves (18, 20) and/or studs (16, 19), able to cooperate with corresponding lateral support surfaces (12, 12', 13', 17, 26) to give the component an abrupt increase in transverse stiffness from the moment when it is subjected to a predetermined compressive force in the said principal direction.
